# EUROPÄISCHE PATENTSCHRIFT

(11) **EP 3 510 620 B1**
(45) Veröffentlichungstag und Bekanntmachung des Hinweises auf die Patenterteilung: **04.06.2025**
(21) Anmeldenummer: 17767779.6
(22) Anmeldetag: 07.09.2017
(51) Int. Cl.: H01H 9/54

(54) **SCHUTZSCHALTGERÄT**
CIRCUIT BREAKER
DISJONCTEUR

(30) Priorität: 09.09.2016 DE 102016117004
(43) Veröffentlichungstag der Anmeldung: 17.07.2019
(73) Patentinhaber: Eaton Intelligent Power Limited, Dublin 4 (IE)
(72) Erfinder: ASKAN, Kenan, 1090 Wien (AT)
(74) Vertreter: Epping - Hermann - Fischer
(86) Internationale Anmeldenummer: PCT/EP2017/072533
(87) Internationale Veröffentlichungsnummer: WO 2018/046632

(56) Entgegenhaltungen:
- WO-A1-2013/071980
- DE-A1- 102014 108 657

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. An die Halbleiterschaltungsanordnung, welche dazu dient einen Kurzschluss abzuschalten, und welche gemäß der WO 2015/028634 A1 eine Gleichrichterbrücke sowie zwei IGBT aufweist, ist weist weiters ein Snubber, daher ein Dämpfungsglied, angeschlossen. Der Snubber dient dem Schutz der IGBT, und ist aufgebaut aus einem Widerstand und einem seriell zu diesem geschalteten Kondensator, wobei der Widerstand von einer Diode überbrückt ist.

Ein derartiger Aufbau ist weiters auch aus der DE 10 2014 108 657 A1 der Anmelderin bekannt.

Es hat sich gezeigt, dass die Diode des Snubber - im Falle des Ausschaltens eines Kurzschlusses - den Stress auf die IGBT erheblich vergrößert. Dies beruht auf dem Umstand, dass es sich dabei jeweils um bipolare Vorrichtungen handelt. Die IGBT sowie die Diode müssen deshalb derart ausgewählt bzw. dimensioniert werden, dass diese den hohen Anforderungen bei einem Kurzschluss gerecht werden. Dies führt zu einer Erhöhung der Baugrößen der jeweiligen Teile, sowie aufgrund der Verlängerung der Wege, auch zu einer Vergrößerung der Schleifeninduktanz, und der Ausschaltzeit.

Die WO 2013/071980 A1 beschreibt einen Hochspannungs-Gleichstrom-Schutzschalter mit hybridem Aufbau. Dieser weist einen Snubber auf, welcher lediglich aus einem Widerstand und einem Kondensator besteht.

Aufgabe der Erfindung ist es daher ein Schutzschaltgerät der eingangs genannten Art anzugeben, mit welchem die genannten Nachteile vermieden werden können, welches eine geringe Baugröße aufweist, und welches über eine lange Zeit eine hohe Zuverlässigkeit aufweist.

Erfindungsgemäß wird dies durch die Merkmale des Patentanspruches 1 erreicht.

Dadurch kann der Aufbau des Niederspannungs-Schutzschaltgeräts vereinfacht werden. Dadurch kann auf einen Bauteil verzichtet werden, welcher eine erhebliche Baugröße aufweist. Dabei hat sich gezeigt, dass durch den Verzicht auf die Diode die Lebensdauer der IGBT verlängert werden kann, bzw. dass weniger belastbare IGBT eingesetzt werden können. Aufgrund der langen Zeitdauer zwischen zwei Schaltvorgängen eines Schutzschaltgeräts, welche gemäß Norm bei drei Minuten liegt, entstehen durch den Verzicht auf die Diode keinen negativen Effekte für den Niederspannungs-Schutzschaltgerät oder die Halbleiterschaltungsanordnung. Durch den Verzicht auf die Diode wird das Niederspannungs-Schutzschaltgerät kompakter, kostengünstiger und langlebiger.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Schutzschaltgerät gemäß dem Stand der Technik als schematische Darstellung; und
Fig. 2 einen Teil eines Niederspannungs-Schutzschaltgeräts gemäß der bevorzugten Ausführungsform der gegenständlichen Erfindung.

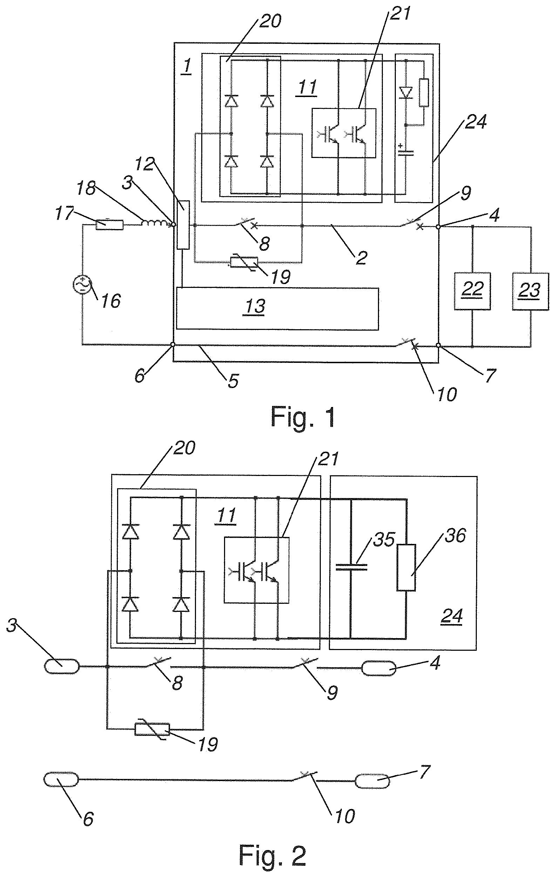

Die Fig. 2 zeigt ein Niederspannungs-Schutzschaltgerät 1 mit mindestens einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 und ein erster mechanischer Trennschalter 9 seriell angeordnet sind, wobei in der Neutralleiterstrecke 5 ein zweiter mechanischer Trennschalter 10 angeordnet ist, wobei eine Halbleiterschaltungsanordnung 11 des Niederspannungs-Schutzschaltgeräts 1 parallel zum Bypassschalter 8 geschaltet ist, wobei in der Außenleiterstrecke 2 eine erste Strommessanordnung 12, insbesondere umfassend einen Shunt, angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8, den ersten mechanischen Trennschalter 9, den zweiten mechanischen Trennschalter 10 und die Halbleiterschaltungsanordnung 11 bei Detektion eines vorgebbaren Überstromes, insbesondere eines Kurzschlussstromes, durch die Strommessanordnung 12 anzusteuern, wobei schaltungstechnisch parallel zur Halbleiterschaltungsanordnung 11 ein Snubber 24 angeordnet ist, wobei der Snubber 24 einen Kondensator 35 sowie einen, schaltungstechnisch parallel zum Kondensator 35 angeordneten Widerstand 36 aufweist.

Dadurch kann der Aufbau des Niederspannungs-Schutzschaltgeräts 1 vereinfacht werden. Dadurch kann auf einen Bauteil verzichtet werden, welcher eine erhebliche Baugröße aufweist. Dabei hat sich gezeigt, dass durch den Verzicht auf die Diode die Lebensdauer der IGBT 21 verlängert werden kann, bzw. dass weniger belastbare IGBT 21 eingesetzt werden können. Aufgrund der langen Zeitdauer zwischen zwei Schaltvorgängen eines Schutzschaltgeräts 1, welche gemäß Norm bei drei Minuten liegt, entstehen durch den Verzicht auf die Diode keinen negativen Effekte für den Niederspannungs-Schutzschaltgerät 1 oder die Halbleiterschaltungsanordnung 11. Durch den Verzicht auf die Diode wird das Niederspannungs-Schutzschaltgerät 1 kompakter, kostengünstiger und langlebiger.

Bei dem gegenständlichen Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bezeichnet. Das gegenständliche Niederspannungs-Schutzschaltgerät 1 ist insbesondere ein reines Wechselspannungsschaltgerät.

Fig. 1 zeigt ein Schutzschaltgerät gemäß dem Stand der Technik, wie dieses etwa in der WO 2015/028634 A1 beschrieben ist. Dieses weist, wie auch das gegenständliche Schutzschaltgerät 1 eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein herkömmlicher mechanischer Bypassschalter 8 mit einfacher Kontaktunterbrechung angeordnet. Bevorzugt und wie dargestellt, ist in der Außenleiterstrecke 2 weiters ein erster mechanischer Trennschalter 9, insbesondere seriell zum Bypassschalter 8, angeordnet. In der Neutralleiterstrecke 5 ist bevorzugt ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein Überspannungsableiter 19 geschaltet.

Das Schutzschaltgerät 1 weist weiters eine Strommessanordnung 12 auf, welche in der Außenleiterstrecke 2 angeordnet ist, und welche bevorzugt umfassend einem Shunt bzw. Shunt-Widerstand ausgebildet ist. Die erste Strommessanordnung 12 ist bevorzugt seriell sowohl zum Bypassschalter 8 als auch zur Halbleiterschaltungsanordnung 11 angeordnet.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die Halbleiterschaltungsanordnung 11, sowie vorzugsweise den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in den Fig. 1 und 2 dargestellt. Beim Ausschalten wird dabei nach dem Abschalten der IGBTs 21 die Spannung wegen der im Netz gespeicherten Energie steigen wird. Die steigende Spannung wird vom Überspannungsableiter 19 geleitet, welcher den Strom begrenzt. Wenn der Strom klein genug ist, werden der erste und zweite mechanische Trennschalter 9, 10 geöffnet.

Die Halbleiterschaltungsanordnung 11 weist bevorzugt eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein.

In Fig. 1 ist neben dem eigentlichen Schutzschaltgerät 1 weites die elektrische Umgebung angedeutet. Dabei ist das Versorgungsnetz durch die AC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schaltgerät gemäß dem Stand der Technik, wie in Fig. 1 gezeigt, ist vorgesehen, dass ein Abschaltvorgang von dem Bypassschalter 8 und der Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Bei einem gegenständlichen Niederspannungs-Schutzschaltgerät 1, wie dies als bevorzugte Ausführungsform in Fig. 2 dargestellt ist, ist vorgesehen, dass der Snubber 24 einen Kondensator 35 aufweist, zu dem schaltungstechnisch parallel ein Widerstand 36 angeordnet ist. Sämtliche Bauteile bzw. Baugruppen des gegenständlichen Niederspannungs-Schutzschaltgeräts 1, welche nicht als alternativ bzw. unterschiedlich zu dem Niederspannungs-Schutzschaltgerät gemäß Fig. 1 beschrieben sind, entsprechen dem Niederspannungs-Schutzschaltgerät gemäß Fig. 1.

Der Snubber 24 ist dabei diodenfrei ausgebildet. Es hat sich, wie bereits dargelegt, gezeigt, dass bei den erwartet langen Zeiten zwischen zwei Schaltvorgängen auf die Diode verzichtet werden kann, ohne dass dadurch negativer Effekte auftreten. Vielmehr hat sich gezeigt, dass der Verzicht auf die Diode neben der Verringerung der Baugröße und der Kostenreduktion auch der Stress auf die IGBT 21 gesenkt werden kann. Durch den Verzicht auf die Diode konnte also in überraschender Weise die elektrotechnische Leistungsfähigkeit des Niederspannungs-Schutzschaltgeräts 1 gesteigert werden.

Bevorzugt ist vorgesehen, dass der Widerstand 36 hochohmig ausgebildet ist, wobei der Widerstand 36 vorzugsweise größer 5 kΩ, insbsondere10 kΩ, ist. Durch den hochohmigen Widerstand 36 kann der Kondensator 35 entladen werden.

Beim Einschalten des gegenständlichen Niederspannungs-Schutzschaltgeräts 1 wird bei einem Nulldurchgang der Spannung zuerst der erste mechanische Trennschalter 9, sowie unmittelbar nachfolgend der zweite mechanische Trennschalter 10 geschlossen. Dadurch kann ein Einschaltstrom des Kondensators 35 vermieden bzw. jedenfalls gering gehalten werden. Beim nachfolgenden nächsten Nulldurchgang der Spannung wird die Halbleiterschaltungsanordnung 11 eingeschaltet, wodurch kein großer Einschaltstrom durch die IGBT 21 fließt. Beim nachfolgenden nächsten Nulldurchgang der Spannung wird der Bypassschalter 8 geschlossen. Die elektronische Steuereinheit 13 ist entsprechend dazu ausgebildet die betreffenden Komponenten in der angegebenen Reihenfolge zu betätigen.

## Patentansprüche

1. Niederspannungs-Schutzschaltgerät (1) mit mindestens einer Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1), und einer Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1), wobei in der Außenleiterstrecke (2) ein mechanischer Bypassschalter (8) angeordnet ist, wobei eine Halbleiterschaltungsanordnung (11) des Niederspannungs-Schutzschaltgeräts (1) parallel zum Bypassschalter (8) geschaltet ist, wobei in der Außenleiterstrecke (2) eine erste Strommessanordnung (12), insbesondere umfassend einen Shunt, angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die Halbleiterschaltungsanordnung (11) bei Detektion eines vorgebbaren Überstromes, insbesondere eines Kurzschlussstromes, durch die Strommessanordnung (12) anzusteuern, wobei schaltungstechnisch parallel zur Halbleiterschaltungsanordnung (11) ein Snubber (24) angeordnet ist, wobei in der Außenleiterstrecke (2) ein erster mechanischer Trennschalter (9) angeordnet ist, wobei in der Neutralleiterstrecke (5) ein zweiter mechanischer Trennschalter (10) angeordnet ist, **dadurch gekennzeichnet, dass** der Snubber (24) einen Kondensator (35) sowie einen, schaltungstechnisch parallel zum Kondensator (35) angeordneten Widerstand (36) aufweist,
dass der Snubber (24) diodenfrei ausgebildet ist, und die elektrische Steuereinheit (13) dazu ausgebildet ist, beim Einschalten des Niedrigspannungs-Schutzschaltgeräts (1) bei einem Nulldurchgang einer Spannung zuerst den ersten mechanische Trennschalter (9) und unmittelbar nachfolgend den zweiten mechanischen Trennschalter (10) zu schließen.

2. Niederspannungs-Schutzschaltgerät (1) nach Anspruch 1, **dadurch gekennzeichnet, dass** der Widerstand (36) hochohmig ausgebildet ist, wobei der Widerstand (36) vorzugsweise größer 5 kΩ, insbsondere10 kΩ, ist.

3. Niederspannungs-Schutzschaltgerät (1) nach einem der Ansprüche 1 oder 2, **dadurch gekennzeichnet, dass** der erste mechanischer Trennschalter (9) seriell zum Bypassschalter (8), angeordnet ist.

## Claims

1. Low-voltage circuit breaker (1) having at least one phase conductor section (2) from a phase conductor supply terminal (3) of the low-voltage circuit breaker (1) to a phase conductor load terminal (4) of the low-voltage circuit breaker (1) and a neutral conductor section (5) from a neutral conductor terminal (6) of the low-voltage circuit breaker (1) to a neutral conductor load terminal (7) of the low-voltage circuit breaker (1), wherein a mechanical bypass switch (8) is arranged within the phase conductor section (2), wherein a semi-conductor circuit arrangement (11) of the low-voltage circuit breaker (1) is connected in parallel with the bypass switch (8), wherein a first current measuring arrangement (12), in particular comprising a shunt, is arranged within the phase conductor section (2), which is connected to an electronic control unit (13) of the circuit breaker (1), wherein the electronic control unit (13) is configured to actuate the bypass switch (8) and the semi-conductor circuit arrangement (11) upon detection of a predeterminable over-current, in particular a short-circuit current, by means of the current measuring arrangement (12), wherein a snubber (24) is arranged in parallel with the semi-conductor circuit arrangement (11) in terms of circuitry, wherein a first mechanical disconnect switch (9) is arranged within the phase conductor section (2), wherein a second mechanical disconnect switch (10) is arranged within the neutral conductor section (5), **characterised in that** the snubber (24) has a capacitor (35) and a resistor (36) arranged in parallel with the capacitor (35) in terms of circuitry,
the snubber (24) is designed free of a diode and the electronic control unit (13) is configured to first close the first mechanical disconnect switch (9) and immediately thereafter the second mechanical disconnect switch (10) when the low-voltage circuit breaker (1) is switched on in the event of a voltage zero crossing.

2. Low-voltage circuit breaker (1) according to claim 1, **characterised in that** the resistor (36) is of a high-resistance design, wherein the resistor (36) has a resistance of preferably greater than 5 kΩ, in particular 10 kΩ.

3. Low-voltage circuit breaker (1) according to any one of claims 1 or 2, **characterised in that** the first mechanical disconnect switch (9) is arranged in series with the bypass switch (8).

## Revendications

1. Disjoncteur (1) basse voltage comportant au moins un tronçon de conducteur extérieur (2) à partir d'un raccord d'alimentation de conducteur extérieur (3) du disjoncteur (1) basse voltage à un raccord de charge de conducteur extérieur (4) du disjoncteur (1) basse voltage, et un tronçon de conducteur neutre (5) à partir d'un raccord de conducteur neutre (6) du disjoncteur (1) basse voltage à un raccord de charge de conducteur neutre (7) du disjoncteur (1) basse voltage, dans lequel dans le tronçon de conducteur extérieur (2) est disposé un commutateur de dérivation mécanique (8), dans lequel un agencement de circuit à semi-conducteur (11) du disjoncteur (1) basse voltage est branché en parallèle avec le commutateur de dérivation (8), dans lequel dans le tronçon de conducteur extérieur (2) est disposé un premier agencement de mesure de courant (12), en particulier comprenant un shunt, lequel est relié à une unité de commande électronique (13) du disjoncteur (1), dans lequel l'unité de commande électronique (13) est conçue pour commander le commutateur de dérivation (8) et l'agencement de circuit à semi-conducteur (11) lors de la détection d'une surintensité déterminable, en particulier d'un courant de court-circuit, à travers l'agencement de mesure de courant (12), dans lequel un amortisseur (24) est agencé selon la technique des circuits parallèlement à l'agencement de circuit à semi-conducteur (11), dans lequel dans le tronçon de conducteur extérieur (2) est disposé un premier sectionneur mécanique (9), dans lequel dans le tronçon de conducteur neutre (5) est disposé un second sectionneur mécanique (10), **caractérisé en ce que** l'amortisseur (24) présente un condensateur (35) ainsi qu'une résistance (36) disposée, selon la technique des circuits, parallèlement au condensateur (35),
**en ce que** l'amortisseur (24) est réalisé sans diode, et l'unité de commande électrique (13) est conçue, lors de la mise sous voltage du disjoncteur (1) basse voltage lors d'un passage par zéro d'un voltage, pour fermer d'abord le premier sectionneur mécanique (9) et directement après le second sectionneur mécanique (10).

2. Disjoncteur (1) basse voltage selon la revendication 1, **caractérisé en ce que** la résistance (36) est réalisée à haute impédance, dans lequel la résistance (36) est de préférence supérieure à 5 kΩ, en particulier à 10 kΩ.

3. Disjoncteur (1) basse voltage selon l'une des revendications 1 ou 2, **caractérisé en ce que** le premier sectionneur mécanique (9) est agencé en série par rapport au commutateur de dérivation (8).
